# EUROPEAN PATENT APPLICATION

(11) **EP 1 852 275 A1**
(43) Date of publication of application: **07.11.2007**
(21) Application number: 07251856.6
(22) Date of filing: 03.05.2007
(51) Int. Cl.: B60B 35/08, B60T 13/26, B60T 17/08, F16D 65/14, B60B 35/02

(54) **Improvements in vehicle braking systems**

(30) Priority: 03.05.2006 GB 0608740
(71) Applicant: Meritor Heavy Vehicle Braking Systems (UK) Limited, Cwmbran, Gwent NP44 3XU (GB)
(72) Inventor: Thompson, Richard Edgar, Monmouthshire NP25 3SN (GB); Robertson, John, CH66 4YS (GB); Juanpere, Albert, BARCELONA 08032 (ES); Bellingham, Richard Martin, LL 12OPN (GB); Gaywood, Michael James, Newport NP 11 3AT (GB); Taylor, Martin Pors, Torfaen NP44 3ND (GB); Aprameya, Sridhar, West Midlands, B29 7JD (GB); Shih, Shan, Michigan 48084 (US); Jackson, Jonathan Leslie Christopher, Herefordshire HR9 6EA (GB)
(74) Representative: Jones, John Bryn

(57) **Abstract**

A tubular vehicle axle (31) having a primary air brake actuator (44) therein, wherein the tubular wall of said axle (31) defines a pressure vessel of said primary actuator (44), wherein said primary actuator (44) has an output axis coincident with the rotary axis of said axle, and further including an auxiliary air actuator (52) therein and directly operable on said primary actuator (44) thereon.

## Description

This invention relates to vehicle braking systems, and is particularly concerned with actuators for wheel brakes of commercial vehicles.

Passenger and light commercial vehicles generally use hydraulic fluid as an actuation medium in a closed system. Heavy commercial vehicles rely upon air under pressure as the actuating medium; such systems are open in that air is exhausted to atmosphere from the vicinity of the wheel brakes.

One difficulty with air systems is that the necessary air actuator has a relatively large diameter and axial length in order to achieve the necessary actuation force, whilst keeping piston travel and lever ratio within acceptable limits. Such an actuator is typically mounted on the backplate of a drum brake, or directly onto the caliper of a disc brake, and protrudes into the wheel arch space. However the space available is severely constrained by the vehicle chassis, suspension, axle, hub and wheel design.

What is required is an improved actuator which has a reduced space requirement but remains compatible with existing actuation systems and wheel brake components.

According to a first aspect of the invention there is provided a primary air brake actuator of a vehicle, wherein the housing of the primary actuator comprises an axle of the vehicle and wherein the tubular wall of said axle defines a pressure vessel of said primary actuator. According to a second aspect of the invention a tubular axle of a vehicle defines a primary air brake actuator there within and wherein the tubular wall of said axle defines a pressure vessel of said primary actuator.

The moving component of the primary actuator may be a diaphragm anchored relative to the inner surface of the axle wall. The moving component may be a piston slidable directly on the inner surface of the axle wall. The primary actuator may alternatively be a self-contained unit comprising a drum like housing and adapted for insertion and retention within the axle housing.

In a preferred embodiment said primary actuator has an output rod co-axial with the axis of rotation of said axle, and a corresponding lever protruding through said casing to operate a brake of said axle. In a preferred embodiment said lever is generally radial of said axis of rotation, and is pivoted immediately adjacent the radially outer end thereof. The lever preferably passes through a narrow slot in the wall of the said axle, said slot extending parallel to said axis.

In a preferred embodiment said axle further defines an auxiliary air brake actuator in series with primary air brake actuator, and preferably axially inboard thereof. Such an auxiliary actuator is preferably of the springboard kind in which air under pressure holds the auxiliary actuator in the off condition. The moving component of the auxiliary actuator may be a diaphragm or piston of the type mentioned above.

Preferably the primary and auxiliary actuators are co-axial and on the rotary axis of said axle.

In the preferred embodiment a helical spring is provided inboard of the auxiliary actuator and is operable to urge the moving component thereof axially outward. The spring is preferably anchored directly on the interior of said axle housing.

According to a further aspect of the present invention, there is provided a tubular vehicle axle having a primary air brake actuator therein, wherein said primary actuator has an output axis coincident with the rotary axis of said axle.

According to a still further aspect of the present invention, there is provided a tubular vehicle axle having a primary air brake actuator therein, further including an auxiliary air actuator therein and directly operable on said primary actuator thereon.

Other features of the invention will be apparent from the following description of an embodiment with reference to the accompanying drawings in which:
Fig.1 is a schematic representation of a prior art brake arrangement.
Fig.2 is a schematic representation of a brake arrangement according to the present invention.
Fig.3 is a more detailed schematic representation of the kind of arrangement illustrated in Fig.2.

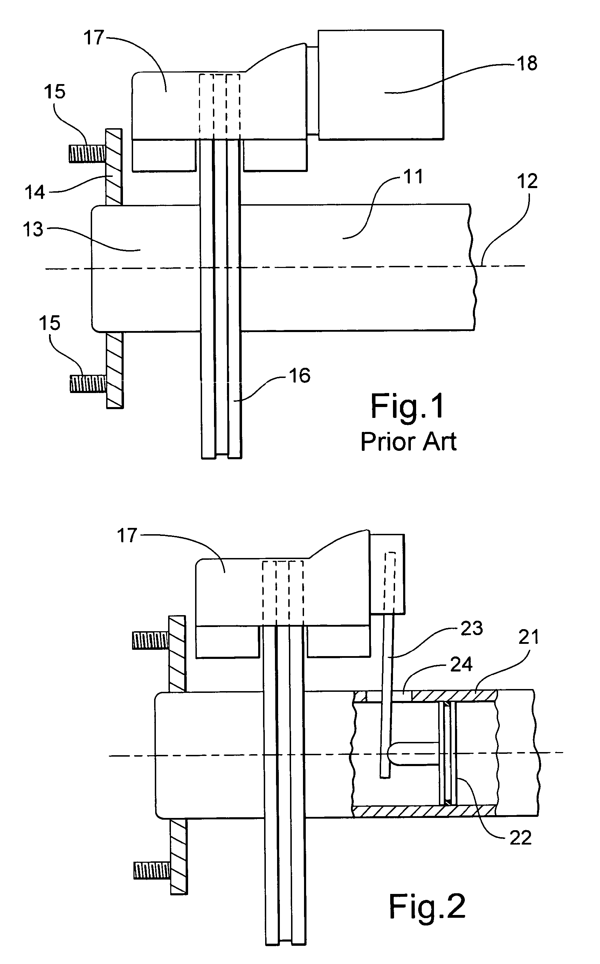

With reference to the drawings Fig.1 illustrates a conventional arrangement in which a vehicle axle 11 has a centreline axis 12. Rotatable about the axis 12 is a hub 13 having a flange 14 for vehicle wheel studs 15 and a brake rotor 16. A brake caliper 17 extends on either side of the rotor 16 and has an actuator 18 whereby opposite brake pads (not shown) can be urged against the opposite annular faces of the rotor. The actuator 18 generally comprises a cylindrical container within which a piston or diaphragm can be urged axially by the admission of air under pressure to one side. Typically the actuator acts via a lever onto the pad centreline, and a suitable wear adjuster and return spring is incorporated. The caliper may be fixed, but is more typically floating; brake torque is reacted by suitable mountings of the vehicle axle.

In the inventive arrangement according to Fig.2, the actuator is housed within a tubular axle 21 which in this embodiment acts directly acts as a cylinder for a piston 22. A lever 23 passes through a slot 24 in the axle 21 to actuate the brake pads. Suitable return spring and dust bats are provided. A much smaller housing 25 is provided on the body of the caliper 17, thus making available valuable space in the wheel arch area inboard of the caliper. Since the space within a tubular axle is not used for any other purpose, there are no consequent space constraints for other components. Furthermore, the entire axial length of the axle is available for use, which means that travel restrictions of conventional actuators need not apply.

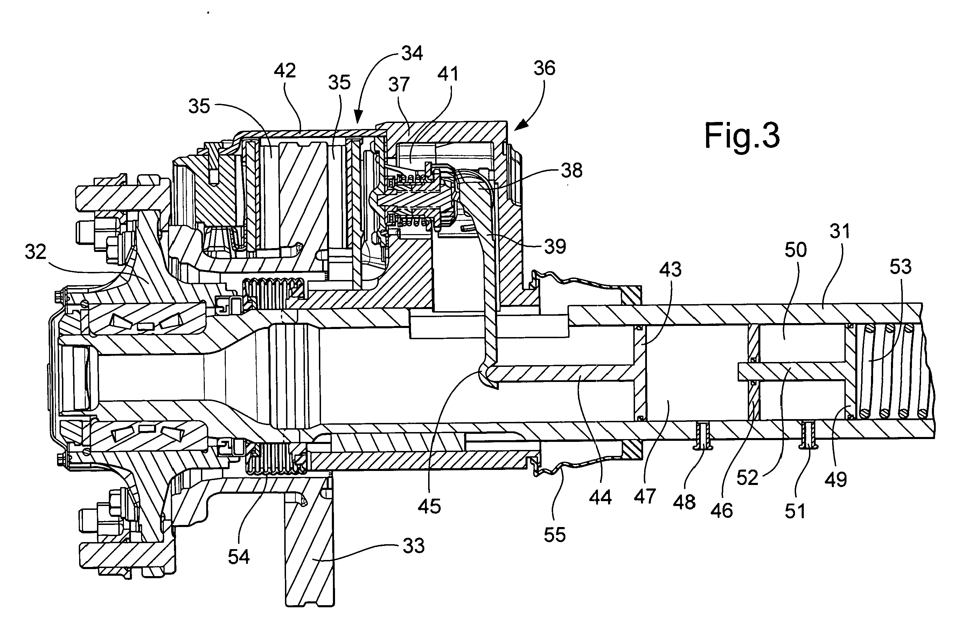

A detailed schematic arrangement is illustrated in Fig.3 in which a tubular undriven axle 31 has a reduced diameter end portion on which is mounted a rotatable hub 32 via suitable roller bearings. Bolted to the hub 32 and rotatable therewith is a brake rotor 33 which extends inboard of the hub. Located over the rotor is a floating brake caliper 34 having opposite brake pads 35; the caliper is anchored on the axle in any suitable manner so as to resist braking torque.

An actuation assembly 36 comprises a housing 37 having one end 38 of a lever 39 pivoted therein; the lever 39 acts directly on the inboard brake pad via an adjuster mechanism 41, and indirectly on the outboard pad via the usual caliper yoke 42 - such an arrangement is conventional.

Within the tubular axle 31 is provided a primary piston 43 having a strut 44 acting as the other end 45 of the lever 39. Inboard of the piston 43, a partition wall 46 defines a closed chamber 47 having an inlet/outlet port 48 in the wall of the axle.

An auxiliary piston 49 defines a closed chamber 50 on the other side of wall 46 and also has an inlet/outlet port 51 in the wall of the axle. The auxiliary piston 49 has a strut 52 which extends in a sealed manner through the partition wall 46 as illustrated. A heavy coil spring 53 urges the auxiliary piston 49 in the outboard direction and reacts against an internal abutment of the axle which is not shown.

Suitable boots 54,55 seal the interior of the axle against moisture and dirt.

In use admission of air under pressure via port 48 causes the primary piston 46 to move to the right as viewed, thus causing the lever 39 to pivot clockwise and apply the brake pads to the rotor via the adjuster 41. When the port 48 is connected to exhaust, the piston returns; an additional release spring may be provided if necessary.

The auxiliary piston provides a park brake/emergency brake. In normal operation air under pressure is admitted via port 51 so that the piston 49 is urged to the right as viewed, compressing still further the heavy spring 53. If air is exhausted from chamber 50, the piston 49 moves to the left, under the action of spring 53, and the strut 52 directly acts on the primary piston 43 to apply the brake pads to the rotor.

It will be appreciated that one end of an axle is illustrated; corresponding mirror image components will be provided for the wheel brake at the other end of the axle.

Instead of a piston acting directly on the interior of the axle casing, a tubular sleeve may be provided. The actuator may have diaphragms in place of pistons. Furthermore the actuator may comprise one or more self contained units inserted into the axle upon assembly thereof.

## Claims

1. A tubular vehicle axle having a primary air brake actuator therein,wherein the tubular wall of said axle defines a pressure vessel of said primary actuator.

2. An axle according to claim 1 wherein said tubular wall defines a cylinder for a piston of said primary actuator.

3. An axle according to any preceding claim wherein said primary actuator has an output axis coincident with the rotary axis of said axle.

4. An axle according to claim 3 wherein said primary actuator has an output strut movable along said rotary axis.

5. An axle according to claim 4 wherein said primary actuator further includes a lever pivotably connected to said strut and passing through the wall of said axle in a plane coincident with said drive axis.

6. An axle according to any preceding claim and further including an auxiliary air actuator therein and directly operable on said primary actuator thereon.

7. An axle according to claim 6 wherein said primary and auxiliary actuator are in series.

8. An axle according to claim 7 wherein said auxiliary actuator is axially inboard of said primary actuator.

9. An axle according to claim 8 and further including a helical compressor spring axially inboard of said auxiliary actuator and directly operable thereon.

10. A tubular vehicle axle having a primary air brake actuator therein, wherein said primary actuator has an output axis coincident with the rotary axis of said axle.

11. A tubular vehicle axle having a primary air brake actuator therein, further including an auxiliary air actuator therein and directly operable on said primary actuator thereon.
